# EUROPÄISCHE PATENTANMELDUNG

(11) **EP 4 378 652 A1**
(43) Veröffentlichungstag der Anmeldung: **05.06.2024**
(21) Anmeldenummer: 23213569.9
(22) Anmeldetag: 01.12.2023
(51) Int. Cl.: B28D 1/12

(54) **SCHNEIDPERLE FÜR SÄGESEILE**

(30) Priorität: 02.12.2022 AT 509192022
(71) Anmelder: Tyrolit - Schleifmittelwerke Swarovski AG & Co K.G., 6130 Schwaz (AT)
(72) Erfinder: PETSCHNIG, Lucas, 6092 Birgitz (AT); NOESSLER, Thomas, 6220 Buch in Tirol (AT)
(74) Vertreter: Torggler & Hofmann Patentanwälte - Innsbruck

(57) **Zusammenfassung**

Schneidperle (1) für Sägeseile (2) mit einem Grundkörper (3), vorzugsweise bestehend aus Stahl, wobei der Grundkörper (3) eine konvexe Außenkontur (4), auf welcher zumindest bereichsweise wenigstens ein Schleifbelag (5) angeordnet oder anordenbar ist, und wenigstens einen sich an die konvexe Außenkontur (4) anschließenden Fortsatz (6) und/oder wenigstens eine ebene Stirnseite (23) quer zu einer Längsachse (8) der Schneidperle (1) aufweist, wobei die konvexe Außenkontur (4) symmetrisch zu einer Symmetrieebene (7) der konvexen Außenkontur (4) quer zur Längsachse (8) der Schneidperle (1) ausgebildet ist.

## Beschreibung

Die vorliegende Erfindung betrifft eine Schneidperle für Sägeseile gemäß den Merkmalen des Oberbegriffs des Anspruchs 1.

Des Weiteren betrifft die Erfindung ein Sägeseil und eine Seilsäge mit derartigen Schneidperlen, ein Verfahren zur Herstellung von Sägeseilen mit derartigen Schneidperlen und ein Verfahren zum Betrieb einer Seilsäge.

Schneidperlen bestehen im Wesentlichen aus einem Grundkörper, auf welchem ein Schleifbelag angeordnet oder anordenbar ist, und sind üblicherweise auf einem Draht- bzw. Tragseil eines Sägeseils aufgefädelt.

Bei einer Bewegung eines Sägeseils entlang einer Oberfläche eines Werkstoffes, wird die Oberfläche des Werkstoffs lokal abgeschliffen, wodurch der Werkstoff abgeschnitten bzw. geteilt werden kann.

Sägeseile finden beispielsweise in der Baubranche ihren Einsatz, wobei sie in Verbindung mit Seilsägen dazu verwendet werden, größere Beton- oder Stahlbetonteile, metallische Werkstoffe oder auch Naturstein abzuschneiden, zu zerteilen und/oder zu verkleinern. Sägeseile können dabei sowohl im Nass- als auch im Trockenschnitt verwendet werden.

Sägeseile sind im Allgemeinen aus dem Stand der Technik bereits bekannt, wobei zylinder- oder konusförmige Schneidperlen verwendet werden.

Beispielsweise zeigt die Schrift EP 761356 A1 ein Sägeseil mit zylinderförmigen Schneidperlen mit asymmetrisch aufgebrachten Schleifbelägen, wobei die Schneidperlen mittels Stahlfedern beabstandet voneinander auf einem Tragseil des Sägeseils aufgefädelt sind.

Da die Außenkonturen der zylinderförmigen Schneidperlen des in dieser Schrift gezeigten Sägeseils im Wesentlichen parallel bzw. tangential zu einer Schleifrichtung des Sägeseils ausgeführt sind, nutzt sich der Schleifbelag relativ schnell ab. Das heißt, die Lebenszeit derartiger Schneidperlen und Sägeseile ist ungünstigerweise relativ kurz.

Verbesserte Ausführungen von Schneidperlen sind z.B. in den Schriften AT 3424 U1 und DE 20006538 U1 zu finden. Diese Schriften zeigen Schneidperlen mit nach außen gewölbten bzw. konvexen Außenkonturen.

Durch die jeweiligen konvexen Außenkonturen bei den Schneidperlen dieser Schriften nutzen sich die Schneidperlen in ihrer Gesamtheit langsamer ab, da es länger dauert, bis der Schleifbelag an seiner Außenkontur durch die zunehmende Abnutzung abgeflacht wird. So kann das im Schleif- bzw. Schneidbelag enthaltene Korn länger über seiner Einsatzlinie gehalten werden, was so viel bedeutet, dass die Schneidperle länger scharf bleibt. Das heißt, die Lebensdauer der Schneidperlen und Sägeseile wird durch eine konvexe Außenkontur erhöht.

Nachteilig an den Schneidperlen bzw. Sägeseilen der Schriften AT 3424 U1 und DE 20006538 U1, und auch der weiter oben genannten EP 761356 A1, ist jedoch, dass ihre jeweiligen Schneidperlen asymmetrische Außenkonturen des Grundkörpers und/oder eine asymmetrische Anordnung des Schleifbelags auf der Außenkontur aufweisen. Das bedeutet, dass die in diesen Schriften gezeigten Schneidperlen und Sägeseile ausschließlich für eine bevorzugte Bewegungsrichtung der jeweiligen Sägeseile ausgelegt sind.

Ein Bediener muss bei der Handhabung solcher Sägeseile also tunlichst darauf achten, die Sägeseile korrekt bzw. ihrer vorgesehenen Bewegungsrichtung entsprechend einzubauen und zu verwenden. Erfahrungsgemäß kann es dabei immer wieder zu Fehlanwendungen der Sägeseile kommen, wobei Fehlanwendungen z.B. die Unwirksamkeit des Sägeseils und/oder unnötige zusätzliche Einbau- bzw. Ausbauzeiten des Sägeseils mit sich bringen können.

Die Aufgabe der vorliegenden Erfindung ist es daher, eine gegenüber dem Stand der Technik verbesserte Schneidperle bereitzustellen, welche insbesondere eine lange Lebensdauer mit sich bringt und die Gefahr einer Fehlbedienung eines mit einer solchen Schneidperle ausgestatteten Sägeseils reduziert. Weiterhin sollen ein Sägeseil mit einer solchermaßen verbesserten Schneidperle, eine Seilsäge mit einem Sägeseil mit einer solchermaßen verbesserten Schneidperle, ein Verfahren zur Herstellung eines solchen Sägeseils, sowie ein Verfahren zum Betrieb einer entsprechenden Seilsäge angegeben werden.

Diese Aufgabe wird durch die Merkmale der Ansprüche 1, 11, 13, 14 und 16 gelöst.

Die Schneidperle für Sägeseile weist einen Grundkörper auf, wobei der Grundkörper eine konvexe Außenkontur, auf welcher zumindest bereichsweise wenigstens ein Schleifbelag angeordnet oder anordenbar ist, und wenigstens einen sich an die konvexe Außenkontur anschließenden Fortsatz und/oder wenigstens eine ebene Stirnseite quer zu einer Längsachse der Schneidperle aufweist. Weiterhin ist es vorgesehen, dass die konvexe Außenkontur des Grundkörpers der Schneidperle symmetrisch zur Symmetrieebene der konvexen Außenkontur quer zu einer Längsachse der Schneidperle ausgebildet ist.

Ein erster großer Vorteil der Erfindung besteht darin, dass durch die konvexe Außenkontur des Grundkörpers die Abnutzung des Grundkörpers und/oder eines Schleifbelags verlangsamt und somit die Lebensdauer der Schneidperle erhöht wird.

Ein zweiter großer Vorteil besteht darin, dass die Funktion der Schneidperle aufgrund der symmetrischen Form der konvexen Außenkontur des Grundkörpers unabhängig von der Bewegungsrichtung verwendbar ist.

Das heißt, ein Sägeseil mit erfindungsgemäßen Schneidperlen kann vorteilhafterweise in zwei Bewegungsrichtungen bzw. Laufrichtungen mit gleicher Effektivität und Funktionsweise angewendet werden. Dadurch ist die optimale Funktion des Sägeseils immer gegeben und es kann zu keinen Fehlanwendungen kommen. So wird auch die Handhabung für eine Bedienerin deutlich vereinfacht.

Eine kombinatorische äußerst vorteilhafte Wirkung der konvexen Außenkontur und der symmetrischen Ausgestaltung des Grundkörpers kann in einer Verlängerung der Lebensdauer um bis zu 50 % im Vergleich zu herkömmlichen Schneidperlen resultieren.

Dieser Vorteil kommt insbesondere dann zum Tragen, wenn die Schneidperlen, also insbesondere die auf einem Sägeseil aufgefädelten Schneidperlen, während ihrer Lebensdauer in beide Laufrichtungen bewegt werden.

Die bestmögliche Ausnutzung bzw. längste Lebensdauer der Schneidperle ist erzielbar, wenn die Schneidperle in Summe während 50 % der Lebensdauer in eine erste Laufrichtung und während 50 % der Lebensdauer in die andere zweite Laufrichtung bewegt wird.

Praktisch umgesetzt gedacht, kann die Laufrichtung der Schneidperlen bzw. des Sägeseils in regelmäßigen und/oder unregelmäßigen Abschnitten gewechselt werden, d.h. das Sägeseil gewendet werden, um die Lebensdauer zu erhöhen.

Des Weiteren wird durch die symmetrische Form des Grundkörpers, vorzugsweise und des Schleifbelags, auch die Herstellung eines Sägeseils vereinfacht, da nicht darauf geachtet werden muss, die Schneidperlen korrekt bzw. entsprechend einer bevorzugten bzw. vorgesehenen Bewegungsrichtung auf einem Tragseil aufzufädeln.

Unter einer symmetrischen Form der Außenkontur ist eine Ausführung zu verstehen, bei welcher die Außenkontur spiegelsymmetrisch zu einer Symmetrieebene ausgebildet ist, welche Symmetrieebene quer zu einer Längsachse der Schneidperle ausgerichtet ist.

Vorzugsweise ist die Symmetrieebene der konvexen Außenkontur orthogonal zu einer Längsachse der Schneidperle ausgerichtet, wobei die Längsachse der Schneidperle im Wesentlichen eine Rotationssymmetrieachse der Schneidperle ist.

Weitere vorteilhafte Ausführungsformen der Erfindung werden in den abhängigen Ansprüchen definiert.

Der wenigstens eine Fortsatz des Grundkörpers kann vorteilhafterweise die Herstellung der Schneidperle, beispielsweise beim Aufbringen eines Schleifbelags, und/oder die Herstellung eines Sägeseils, beispielsweise beim Aufbringen eines Überzugs, erleichtern.

Besonders bevorzugt ist es vorgesehen, dass der Grundkörper zwei beidseitig an die konvexe Außenkontur anschließende Fortsätze aufweist.

Die zwei Fortsätze können sich in ihrer Form gleichen und/oder spiegelsymmetrisch zu einer Symmetrieebene der konvexen Außenkontur ausgeführt sein.

Bevorzugt ist es vorgesehen, dass der wenigstens eine Fortsatz oder die zwei Fortsätze zylinderförmig ausgebildet ist oder sind.

Die Form des wenigstens einen Fortsatzes oder der Fortsätze kann aber auch variabel, z.B. konusförmig, sich verjüngend, einander ähnlich, verschieden zueinander, symmetrisch oder asymmetrisch zur Symmetrieebene der konvexen Außenkontur, etc. sein.

Besonders bevorzugt ist es vorgesehen, dass der Grundkörper wenigstens eine sich an die konvexe Außenkontur des Grundkörpers anschließende ebene Stirnseite quer zur Längsachse der Schneidperle aufweist.

Es kann auch sein, dass anschließend an die Außenkontur des Grundkörpers wenigstens ein Fortsatz und wenigstens eine ebene Stirnseite vorgesehen sind.

Besonders bevorzugt ist es vorgesehen, dass der Grundkörper symmetrisch zur Symmetrieebene quer zu einer Längsachse der Schneidperle ausgebildet ist.

Das heißt, nicht nur die konvexe Außenkontur, sondern der gesamte Grundkörper inklusive zweier beidseitig zum Grundkörper angeordnete Fortsätze ist spiegelsymmetrisch zur Symmetrieebene ausgebildet.

Eine symmetrische Ausführung des Grundkörpers der Schneidperle kann insbesondere vorteilhaft bei der Aufbringung eines schützenden Überzugs auf ein Sägeseil sein.

Beispielsweise kann durch die symmetrische Ausführung des Grundkörpers die Zentrierung der Schneidperle während eines Einspritzprozesses eines Vulkanisations- oder Formgebungsverfahrens hergestellt und/oder erleichtert werden, um einen gleichmäßigen und/oder qualitativ hochwertigen Überzug zu erzeugen.

Unter Formgebungsverfahren oder -prozesse können Spritzgieß-, Spritzpress-, Pressverfahren oder -prozesse und dergleichen verstanden werden.

Eine Zentrierung der Schneidperle während eines Vulkanisationsprozesses oder Formgebungsprozesses, insbesondere Spritzgießprozesses, kann eine gleichmäßige Verteilung des Vulkanisats oder plastifizierten Kunststoffes in den Zwischenräumen eines Sägeseils und/oder rund um das Sägeseil gewährleisten.

Besonders bevorzugt ist es vorgesehen, dass die Schneidperle symmetrisch zu der Symmetrieebene quer zu einer Längsachse der Schneidperle ausgebildet ist.

Das heißt, der gesamte Grundkörper inklusive der konvexen Außenkontur und zweier beidseitig angeordneter Fortsätze und ein Schleifbelag sind spiegelsymmetrisch zur Symmetrieebene ausgebildet.

Besonders bevorzugt ist es vorgesehen, dass auf der konvexen Außenkontur wenigstens ein Schleifbelag bzw. Schneidbelag mit wenigstens einem Schleifmittel angeordnet ist.

Schleifmittel sind im Allgemeinen harte, zähe, temperaturbeständige und/oder chemisch beständige Materialen, wie beispielsweise Korund, Siliciumcarbid, Diamant, Kubisches Bornitrid (CBN) oder dergleichen.

Das wenigstens eine Schleifmittel ist günstigerweise kornförmig im Schleifbelag als Korn enthalten, wobei das Korn scharf und/oder schnittig ist.

Günstige Korngrößen des Korns des wenigstens einen Schleifbelags sind in etwa zwischen 100 und 16 Mesh.

Es ist denkbar, dass auf der konvexen Außenkontur mehrere Schleifmittel und/oder Schleifbeläge, d.h. im Wesentlichen Schichten von Schleifbelägen, angeordnet sind.

Besonders bevorzugt ist es vorgesehen, dass der wenigstens eine Schleifbelag mit einer konvexen Schleifoberfläche, ausgebildet ist.

Bevorzugt ist es vorgesehen, dass der wenigstens eine Schleifbelag symmetrisch zu der Symmetrieebene quer zur Längsachse der Schneidperle ausgebildet ist.

Vorzugsweise ist die Schleifoberfläche des wenigstens einen Schleifbelags mit einer Oberflächenkontur ausgebildet, welche im Wesentlichen ähnlich der und/oder parallel und/oder mit einem im Wesentlichen konstanten Abstand versetzt zur konvexen Außenkontur des Grundkörpers ist.

In einer bevorzugten Ausführungsvariante besitzen die konvexe Außenoberfläche des Grundkörpers und die konvexe Schleifoberfläche des Schleifbelags denselben Radius bzw. Außenkonturradius.

Der Grundkörper der Schneidperle ist vorzugsweise aus Metall, insbesondere aus Stahl, gefertigt.

Besonders bevorzugt ist es vorgesehen, dass die Schneidperle wenigstens ein Innengewinde, vorzugsweise mit einem Regel- oder Standardgewinde zur Aufnahme von Schrauben mit einem Nenndurchmesser von zwischen 4 mm und 8 mm, aufweist.

Mit einem Innengewinde kann die Schneidperle auch als eine Gewindehülse und/oder Schraubmuffe verstanden werden.

Besonders bevorzugt ist es vorgesehen, dass zwischen der konvexen Außenkontur und dem wenigstens einen Fortsatz wenigstens ein stufenförmiger Absatz, vorzugsweise im Wesentlichen parallel zur Symmetrieebene der konvexen Außenkontur, vorgesehen ist.

Zwischen der konvexen Außenkontur und dem wenigstens einen Fortsatz befinden sich vorzugsweise im Wesentlichen zwei Kanten, welche abgeflacht und/oder aus- und/oder abgerundet oder dergleichen sein können.

Bevorzugt ist es vorgesehen, dass der Absatz eine Größe von zwischen 1 und 20 %, vorzugsweise zwischen 4 und 16 %, einer Länge der Schneidperle aufweist.

Die Länge der Schneidperle ist vorzugsweise entlang ihrer Längsachse gemessen.

Bevorzugt ist es vorgesehen, dass die konvexe Außenkontur mit zumindest einem Außenkonturradius von zwischen 40 und 150 %, vorzugsweise zwischen 60 und 130 %, einer Länge der Schneidperle ausgebildet ist.

Bevorzugte Außenkonturradien sind Radien zwischen 5 und 16 mm, besonders bevorzugt zwischen 5 und 10 mm.

Bevorzugt ist es vorgesehen, dass die Schneidperle entlang der Symmetrieebene der konvexen Außenkontur einen äußeren Außendurchmesser und an den Seiten der konvexen Außenkontur einen inneren Außendurchmesser aufweist, wobei der äußere Außendurchmesser zumindest 3 %, vorzugsweise zumindest 6 %, größer ist als der innere Außendurchmesser, und/oder zwischen 70 und 250 % einer Länge der Schneidperle entspricht.

Ein Durchmesser ist vorzugsweise immer orthogonal zur Längsachse der Schneidperle gemessen.

Bevorzugt ist es vorgesehen, dass die Schneidperle einen äußeren Innendurchmesser und einen inneren Innendurchmesser aufweist, wobei der äußere Innendurchmesser ein größter Durchmesser des wenigstens einen Fortsatzes ist, und/oder zumindest 15 %, vorzugsweise zumindest 30 %, größer als der innere Innendurchmesser ist.

Schutz wird auch begehrt für ein Sägeseil mit einem Tragseil, auf welchem Schneidperlen, vorzugsweise voneinander beabstandet, aufgefädelt sind.

Eine erfindungsgemäße Schneidperle kann durch ihren Einsatz bei bereits bekannten Ausführungsformen von Sägeseilen des Standes der Technik, wie beispielsweise in der Beschreibungseinleitung beschrieben, ihren Einsatz finden und nachträglich installiert werden.

Des Weiteren wird Schutz begehrt für eine Seilsäge, welche wenigstens ein Sägeseil nach wenigstens einem der Ansprüche 11 oder 12 umfasst.

Es wird auch Schutz begehrt für ein Verfahren zur Herstellung eines Sägeseils,
- wobei Schneidperlen und Abstandhalter einander abwechselnd auf ein Tragseil aufgefädelt werden, und
- wobei zwischen den konvexen Außenkonturen der Schneidperlen ein, vorzugsweise kunststoffhaltiger und/oder elastischer, Überzug, vorzugsweise mittels eines Vulkanisations- oder Formgebungsverfahrens, aufgebracht wird.

Es ist besonders bevorzugt vorgesehen, dass die Schneidperlen mittels Abstandhalter, vorzugsweise jeweils umfassend wenigstens eine Stahlfeder, voneinander beabstandet auf dem Tragseil des Sägeseils aufgefädelt sind.

Man kann sich die Schneidperlen als Hülsen vorstellen, welche das Tragseil des Sägeseils konzentrisch umfassen.

Bevorzugt sind die Schneidperlen und Abstandhalter jeweils einzeln einander abwechselnd auf dem Tragseil aufgefädelt.

Es ist aber auch denkbar, dass mehrere Schneidperlen und/oder mehrere Abstandhalter nebeneinander am Tragseil aufgefädelt sind.

Besonders bevorzugt ist es vorgesehen, dass das Sägeseil, insbesondere in Längsrichtung des Sägeseils, zwischen den konvexen Außenkonturen der Schneidperlen wenigstens einen, vorzugsweise kunststoffhaltigen, Überzug zum Schutz des Sägeseils aufweist.

Der wenigstens eine Überzug kann eine, insbesondere schleifbelagslose, Abweishülse sein.

Die Form und/oder Außenkontur des wenigstens einen Überzugs kann zylinderförmig, aber auch variabel, strukturiert, glatt, abgeschrägt etc. sein.

Der Überzug kann verschiedene Arten von Kunststoffen, wie Thermoplaste und/oder Duroplaste und/oder Elastomere, umfassen.

Eine bevorzugte Variante eines Überzugs ist eine elastische, insbesondere elastomere und/oder thermoplastische, Beschichtung.

Im Zuge des Verfahrens zur Herstellung eines Sägeseils ist es besonders bevorzugt vorgesehen, dass auf die konvexe Außenkontur des Grundkörpers einer jeden Schneidperle jeweils wenigstens ein Schleifbelag, vorzugsweise mittels eines Galvanisierungs-, Löt- oder Sinterverfahrens, aufgebracht wird.

Es ist möglich, den wenigstens einen Überzug in einer variablen Form und/oder mit einer variablen Außenkontur aufzubringen.

Der Überzug kann auch auf das im Wesentlichen gesamte Sägeseil aufgebracht werden und vorzugsweise nach erfolgtem Aufbringen, beispielsweise nach erfolgter Vulkanisation, wieder bereichsweise abgetragen, z.B. abgeschliffen, werden.

Es ist auch denkbar, dass mehrere Überzüge mit unterschiedlichen Formen und/oder Außenkonturen aufgebracht werden.

Es wird auch Schutz begehrt für ein Verfahren zum Betrieb einer Seilsäge mit wenigstens einem Sägeseil mit Schneidperlen, wobei das Sägeseil im Wesentlichen gleich häufig in die beiden Bewegungsrichtungen des Sägeseils bewegt wird.

Um die Bewegungsrichtung des Sägeseils von einer ersten Bewegungsrichtung in eine zweite, der ersten Bewegungsrichtung entgegengesetzten Bewegungsrichtung des Sägeseils zu ändern, um das Sägeseil abwechselnd in beide Bewegungsrichtungen anzutreiben, ist es bevorzugt vorgesehen, dass das Sägeseil, insbesondere manuell, neu aufgespannt bzw. in die Seilsäge erneut eingebaut wird.

Es ist auch denkbar, dass die Steuer- oder Regeleinheit der Seilsäge derart gesteuert oder geregelt wird, dass die Bewegungsrichtung des Sägeseils geändert wird.

Weitere Vorteile und Einzelheiten vorteilhafter Varianten der Erfindung ergeben sich aus den Figuren sowie der dazugehörigen Figurenbeschreibung. Dabei zeigen:
- Fig. 1: ein erstes Ausführungsbeispiel einer Schneidperle,
- Fig. 2: ein zweites Ausführungsbeispiel einer Schneidperle, und
- Fig. 3: eine Variante eines Sägeseils mit Schneidperlen gemäß dem zweiten Ausführungsbeispiel.

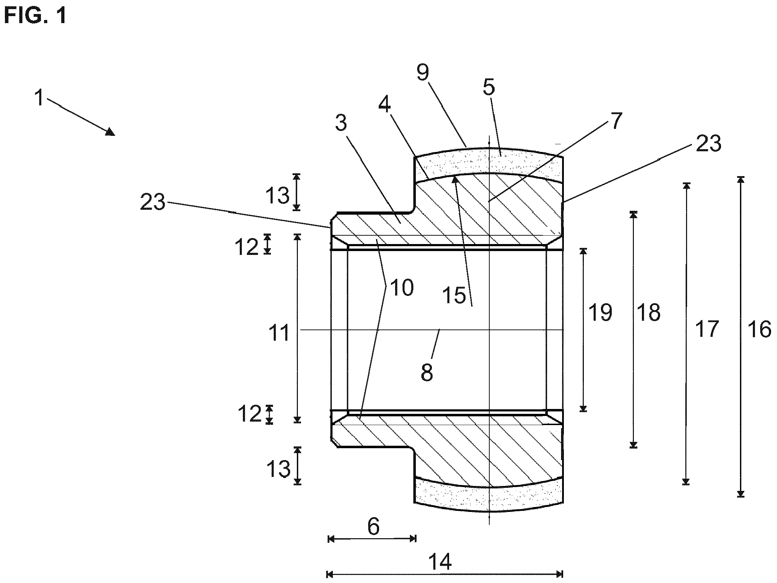

Die Figur 1 zeigt ein erstes Ausführungsbeispiel einer Schneidperle 1 für Sägeseile 2 mit einem Grundkörper 3, wobei der Grundkörper 3 eine konvexe Außenkontur 4, auf welcher zumindest bereichsweise wenigstens ein Schleifbelag 5 angeordnet oder anordenbar ist, und wenigstens einen sich an die konvexe Außenkontur 4 anschließenden Fortsatz 6 und wenigstens eine ebene Stirnseite 23 quer zu einer Längsachse 8 der Schneidperle 1 aufweist, wobei die konvexe Außenkontur 4 symmetrisch zu einer Symmetrieebene 7 der konvexen Außenkontur 4 quer zu einer Längsachse 8 der Schneidperle 1 ausgebildet ist.

Bei diesem Ausführungsbeispiel ist der eine Fortsatz 6 zylinderförmig ausgebildet. Prinzipiell kann der wenigstens eine Fortsatz 6 aber auch geometrisch variabel ausgebildet sein.

Bei diesem Ausführungsbeispiel ist auf der konvexen Außenkontur 4 des Grundkörpers 3 der Schneidperle 1 wenigstens ein Schleifbelag 5 mit wenigstens einem Schleifmittel, vorzugsweise umfassend Diamant und/oder Kubisches Bornitrid (CBN), angeordnet.

Bei diesem Ausführungsbeispiel ist der wenigstens eine Schleifbelag 5 mit einer konvexen Schleifoberfläche 9 ausgebildet, wobei die Schleifoberfläche 9 eine im Wesentlichen parallel zur konvexen Außenkontur 4 verschobene Schleifoberfläche 9 ist.

Bei diesem Ausführungsbeispiel ist der wenigstens eine Schleifbelag 5 symmetrisch zu der Symmetrieebene 7 quer zu einer Längsachse 8 der Schneidperle 1 ausgebildet.

Die symmetrische Ausbildung des wenigstens einen Schleifbelags 5 ist insbesondere dahingehend vorteilhaft, dass die Schneidperle 1 in beiden Bewegungsrichtungen eines Sägeseils 2 verwendet werden kann.

Bei diesem Ausführungsbeispiel weist die Schneidperle 1 ein Innengewinde 10 mit einem Gewindedurchmesser 11 und einer Gewindetaltiefe 12 auf.

Das Innengewinde 10 ist vorzugsweise ein übliches Regel- oder Standardgewinde, welches zur Aufnahme von Schrauben, vorzugsweise entsprechend M4-M8, ausgebildet ist.

Bei diesem Ausführungsbeispiel ist zwischen der konvexen Außenkontur 4 und dem wenigstens einen Fortsatz 6 wenigstens ein stufenförmiger Absatz 13 im Wesentlichen parallel zur Symmetrieebene 7 der konvexen Außenkontur 4 vorhanden.

Bei diesem Ausführungsbeispiel ist die konvexe Außenkontur 4 mit einem konstanten Außenkonturradius 15 ausgebildet.

Es ist auch denkbar, dass die konvexe Außenkontur 4 der Schneidperle 1 mehrere Abschnitte mit unterschiedlichen Außenkonturradien 15 ausgebildet ist.

In der Figur 1 ist gezeigt, dass die Schneidperle 1 vorzugsweise entlang der Symmetrieebene 7 der konvexen Außenkontur 4 einen äußeren Außendurchmesser 16 und an den Seiten der konvexen Außenkontur 4 einen inneren Außendurchmesser 17 aufweist, wobei der äußere Außendurchmesser 16 größer ist als der innere Außendurchmesser 17.

In der Figur 1 ist gezeigt, dass die Schneidperle 1 vorzugsweise einen äußeren Innendurchmesser 18 und einen inneren Innendurchmesser 19 aufweist, wobei der äußere Innendurchmesser 18 größer als der innere Innendurchmesser 19 ist.

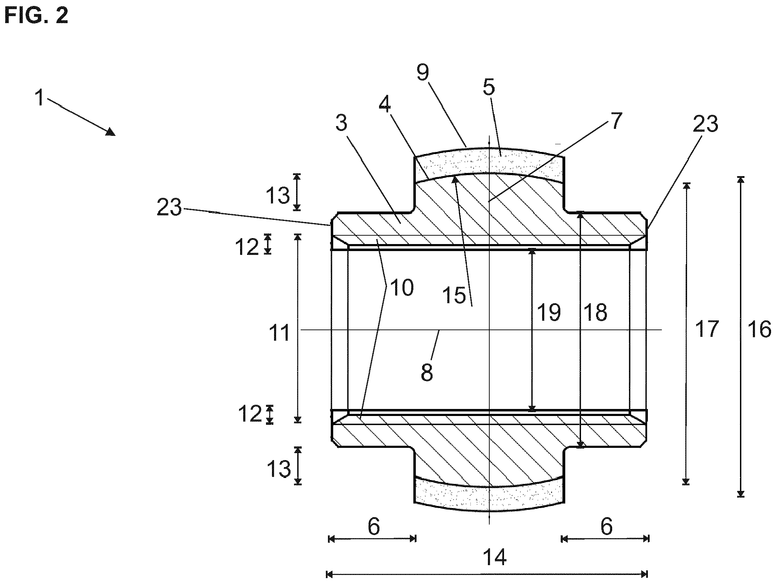

Bei der nun folgenden Beschreibung dem in der Figur 2 gezeigten Ausführungsbeispiel wird zur Vermeidung von Wiederholungen vorrangig auf die Unterschiede zum ersten Ausführungsbeispiel eingegangen. Ansonsten gilt die obige Beschreibung des ersten Ausführungsbeispiels soweit anwendbar auch für das nachfolgend noch beschriebene Ausführungsbeispiel.

Die Figur 2 zeigt ein zweites Ausführungsbeispiel einer erfindungsgemäßen Schneidperle 1, wobei der Grundkörper 3 zwei beidseitig an die konvexe Außenkontur 4 anschließende Fortsätze 6 aufweist und wobei die zwei Fortsätze 6 zylinderförmig ausgebildet sind.

Bei diesem Ausführungsbeispiel ist die gesamte Schneidperle 1 inklusive dem Grundkörper 3 symmetrisch zu der Symmetrieebene 7 quer zu einer Längsachse 8 der Schneidperle 1 ausgebildet.

Der Grundkörper 3 und/oder die Schneidperle 1 ist oder sind aber nicht zwingendermaßen symmetrisch ausgebildet.

Erfindungsgemäß ist zumindest die konvexe Außenkontur 4 symmetrisch zur Symmetrieachse 7 geformt.

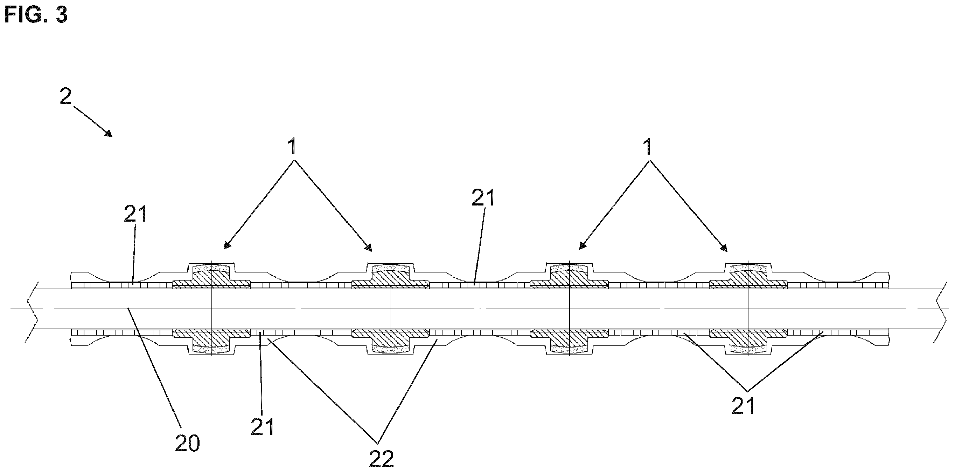

Die Figur 3 zeigt eine Variante eines erfindungsgemäßen Sägeseils 2 mit Schneidperlen 1 gemäß dem zweiten Ausführungsbeispiel.

Hier ist gezeigt, dass das Sägeseil 2 wenigstens ein Tragseil 20 aufweist, auf welchem Schneidperlen 1, vorzugsweise voneinander beabstandet, aufgefädelt sind.

Bei dieser Variante sind die Schneidperlen 1 mittels Abstandhalter 21, vorzugsweise jeweils umfassend wenigstens eine Stahlfeder, voneinander beabstandet aufgefädelt.

Diese Variante eines Sägeseils 2 weist zwischen den konvexen Außenkonturen 4 der Schneidperlen 1 wenigstens einen, vorzugsweise kunststoffhaltigen und/oder elastischen, Überzug 22 zum Schutz des Sägeseils 2 auf.

### Bezugszeichenliste:

- 1: Schneidperle
- 2: Sägeseil
- 3: Grundkörper
- 4: Konvexe Außenkontur
- 5: Schleifbelag
- 6: Fortsatz
- 7: Symmetrieebene
- 8: Längsachse
- 9: Konvexe Schleifoberfläche
- 10: Innengewinde
- 11: Gewindedurchmesser
- 12: Gewindetaltiefe
- 13: Absatz
- 14: Länge der Schneidperle
- 15: Außenkonturradius
- 16: Äußerer Außendurchmesser
- 17: Innerer Außendurchmesser
- 18: Äußerer Innendurchmesser
- 19: Innerer Innendurchmesser
- 20: Tragseil
- 21: Abstandhalter
- 22: Überzug
- 23: Stirnseite

## Patentansprüche

1. Schneidperle (1) für Sägeseile (2) mit einem Grundkörper (3), vorzugsweise bestehend aus Stahl, wobei der Grundkörper (3) eine konvexe Außenkontur (4), auf welcher zumindest bereichsweise wenigstens ein Schleifbelag (5) angeordnet oder anordenbar ist, und wenigstens einen sich an die konvexe Außenkontur (4) anschließenden Fortsatz (6) und/oder wenigstens eine ebene Stirnseite (23) quer zu einer Längsachse (8) der Schneidperle (1) aufweist, **dadurch gekennzeichnet, dass** die konvexe Außenkontur (4) symmetrisch zu einer Symmetrieebene (7) der konvexen Außenkontur (4) quer zur Längsachse (8) der Schneidperle (1) ausgebildet ist.

2. Schneidperle (1) nach Anspruch 1, wobei der Grundkörper (3) zwei beidseitig an die konvexe Außenkontur (4) anschließende Fortsätze (6) aufweist.

3. Schneidperle (1) nach einem der vorhergehenden Ansprüche, wobei der wenigstens eine Fortsatz (6) oder die zwei Fortsätze (6) zylinderförmig ausgebildet ist oder sind.

4. Schneidperle (1) nach einem der vorhergehenden Ansprüche, wobei die Schneidperle (1) und/oder der Grundkörper (3) symmetrisch zu der Symmetrieebene (7) quer zur Längsachse (8) der Schneidperle (1) ausgebildet ist oder sind.

5. Schneidperle (1) nach einem der vorhergehenden Ansprüche, wobei auf der konvexen Außenkontur (4) wenigstens ein Schleifbelag (5) mit wenigstens einem Schleifmittel, vorzugsweise umfassend Diamant und/oder Kubisches Bornitrid, angeordnet ist, vorzugsweise wobei der wenigstens eine Schleifbelag (5) mit einer konvexen Schleifoberfläche (9) ausgebildet ist und/oder symmetrisch zur Symmetrieebene (7) quer zur Längsachse (8) der Schneidperle (1) ausgebildet ist.

6. Schneidperle (1) nach einem der vorhergehenden Ansprüche, wobei die Schneidperle (1) wenigstens ein Innengewinde (10) mit einem Gewindedurchmesser (11) aufweist.

7. Schneidperle (1) nach einem der vorhergehenden Ansprüche, wobei zwischen der konvexen Außenkontur (4) und dem wenigstens einen Fortsatz (6) wenigstens ein stufenförmiger Absatz (13), vorzugsweise im Wesentlichen parallel zur Symmetrieebene (7), der konvexen Außenkontur (4) vorgesehen ist, vorzugsweise wobei der Absatz (13) eine Größe von zwischen 1 und 20 %, vorzugsweise zwischen 4 und 16 %, einer Länge der Schneidperle (14) aufweist.

8. Schneidperle (1) nach einem der vorhergehenden Ansprüche, wobei die konvexe Außenkontur (4) mit zumindest einem Außenkonturradius (15) von zwischen 40 und 150 %, vorzugsweise zwischen 60 und 130 %, einer Länge der Schneidperle (14) ausgebildet ist.

9. Schneidperle (1) nach einem der vorhergehenden Ansprüche, wobei die Schneidperle (1) entlang der Symmetrieebene (7) der konvexen Außenkontur (4) einen äußeren Außendurchmesser (16) und an den Seiten der konvexen Außenkontur (4) einen inneren Außendurchmesser (17) aufweist, wobei der äußere Außendurchmesser (16)
- zumindest 3 %, vorzugsweise zumindest 6 %, größer ist als der innere Außendurchmesser (17), und/oder
- zwischen 70 und 250 % einer Länge der Schneidperle (14) entspricht.

10. Schneidperle (1) nach einem der vorhergehenden Ansprüche, wobei die Schneidperle (1) einen äußeren Innendurchmesser (18) und einen inneren Innendurchmesser (19) aufweist, wobei der äußere Innendurchmesser (18)
- ein größter Durchmesser des wenigstens einen Fortsatzes (6) ist, und/oder
- zumindest 15 %, vorzugsweise zumindest 30 %, größer als der innere Innendurchmesser (19) ist.

11. Sägeseil (2) mit wenigstens einem Tragseil (20), auf welchem Schneidperlen (1) nach einem der Ansprüche 1 bis 10, vorzugsweise voneinander beabstandet, aufgefädelt sind, vorzugsweise wobei die Schneidperlen (1) mittels Abstandhalter (21), vorzugsweise jeweils umfassend wenigstens eine Stahlfeder, voneinander beabstandet aufgefädelt sind.

12. Sägeseil (2) nach Anspruch 11, wobei das Sägeseil (2) zumindest in Längsrichtung des Sägeseils (2) zwischen den konvexen Außenkonturen (4) der Schneidperlen (1) wenigstens einen, vorzugsweise kunststoffhaltigen und/oder elastischen, Überzug (22) zum Schutz des Sägeseils (2) aufweist.

13. Seilsäge zum Zertrennen eines Werkstücks, insbesondere aus Beton, Stahlbeton, Metall oder Naturstein, umfassend
- wenigstens ein Sägeseil (2) nach einem der Ansprüche 11 oder 12,
- wenigstens eine Führungseinheit zum Führen des Sägeseils (2),
- wenigstens einen Antrieb zum Antreiben des Sägeseils (2),
- vorzugsweise wenigstens einen Seilspeicher zum, insbesondere temporären, Zwischenlagern des Sägeseils (2), und
- eine Steuer- oder Regeleinheit zum Steuern oder Regeln des Antriebs, insbesondere einer Bewegungsrichtung, des Sägeseils (2).

14. Verfahren zur Herstellung eines Sägeseils (2) nach einem der Ansprüche 11 oder 12,
- wobei Schneidperlen (1) und Abstandhalter (21) einander abwechselnd auf ein Tragseil (20) aufgefädelt werden, und
- wobei zumindest in Längsrichtung des Sägeseils (2) zwischen den konvexen Außenkonturen (4) der Schneidperlen (1) ein, vorzugsweise kunststoffhaltiger und/oder elastischer, Überzug (22), vorzugsweise mittels eines Vulkanisationsverfahrens und/oder Formgebungsverfahrens, aufgebracht wird.

15. Verfahren nach dem vorhergehenden Anspruch,
- wobei auf die konvexe Außenkontur (4) des Grundkörpers (3) einer jeder Schneidperle (1) jeweils wenigstens ein Schleifbelag (5), vorzugsweise mittels eines Galvanisierungs-, Löt- oder Sinterverfahrens, aufgebracht wird, und/oder
- wobei der wenigstens eine Überzug (22) auf das gesamte Sägeseil (2) aufgebracht wird, sodass das Sägeseil (2) vollständig mit dem Überzug (22) umschlossen wird, und/oder
- wobei das mit dem Überzug (22) umschlossene Sägeseil (2) in den Bereichen der Schleifbeläge (5) vom wenigstens einen Überzug (22), vorzugsweise mittels Abschleifens, freigelegt wird.

16. Verfahren zum Betrieb einer Seilsäge nach Anspruch 13, wobei das Sägeseil (2) in regelmäßigen oder unregelmäßigen Abständen abwechselnd in eine erste Bewegungsrichtung und in eine zweite, der ersten Bewegungsrichtung entgegengesetzte Bewegungsrichtung des Sägeseils (2) angetrieben wird, vorzugsweise, wobei das Sägeseil (2) im Wesentlichen gleich häufig in die beiden Bewegungsrichtungen angetrieben wird.
